# EUROPÄISCHE PATENTSCHRIFT

(11) **EP 0 732 984 B1**
(45) Veröffentlichungstag und Bekanntmachung des Hinweises auf die Patenterteilung: **28.05.1997**
(21) Anmeldenummer: 95904430.6
(22) Anmeldetag: 07.12.1994
(51) Int. Cl.: B25B 29/02, B23P 19/06

(54) **HYDRAULISCHE GEWINDEBOLZENSPANNVORRICHTUNG**
HYDRAULIC THREADED-BOLT CLAMPING DEVICE
SYSTEME DE SERRAGE HYDRAULIQUE A BOULON FILETE

(30) Priorität: 08.12.1993 DE 4341707
(43) Veröffentlichungstag der Anmeldung: 25.09.1996
(73) Patentinhaber: Hohmann, Frank, 59581 Warstein (DE); Hohmann, Jörg, 59581 Warstein (DE)
(72) Erfinder: Hohmann, Frank, 59581 Warstein (DE); Hohmann, Jörg, 59581 Warstein (DE)
(74) Vertreter: Rehders, Jochen, Dipl.-Ing.
(86) Internationale Anmeldenummer: EP9404072
(87) Internationale Veröffentlichungsnummer: WO9515835

(56) Entgegenhaltungen:
- DE-A- 3 711 544
- DE-B- 1 276 565
- DE-C- 875 426
- DE-U- 9 316 464
- US-A- 3 722 332
- US-A- 4 020 720

## Beschreibung

Die Erfindung betrifft eine Gewindebolzenspannvorrichtung, mit einem sich auf einem mittels eines Gewindebolzens und einer Mutter zu verspannenden Maschinenteil abstützenden Zylinder, einem darin abgedichtet geführten, sich an einer auf ein Gewindeende des Gewindebolzens aufgeschraubten Gewindebuchse abstützenden Kolben und mit einer ein Wegschleudern von Teilen der Vorrichtung bei einem Bruch unter Last verhindernden Fangelement.

Bekannte hydraulische Gewindebolzenspannvorrichtungen bestehen aus einem sich auf einem mittels eines Gewindebolzen und einer Mutter zu verspannenden Maschinenteil abstützenden Zylinder, in dem ein Kolben abgedichtet geführt ist. Dieser Kolben stützt sich an einer auf ein Gewindeende des Bolzens aufgeschraubten Gewindebuchse ab. Um den Bolzen zu dehnen, wird Hydrauliköl unter hohem Druck in den Raum zwischen dem Kolben und dem Zylinder eingebracht, so daß sich der Kolben verschiebt und dabei die auf das Gewindeende des Gewindebolzens aufgeschraubte Gewindebuchse mitnimmt. Abhängig vom Druck und der Kolbenfläche sowie vom Durchmesser des Gewindebolzens erfolgt eine Dehnung des Gewindebolzens, und eine zwischen dem Maschinenteil und der Gewindebuchse aufgeschraubte Mutter läßt sich torsionsmomentfrei bis zur Anlage am Maschinenteil von außen anziehen. Dies kann entweder dadurch erfolgen, daß eine mit einem Innensechskant versehene, über die Mutter gesteckte Buchse von außen über ein Zahnrad in Drehung versetzt wird, das durch eine Öffnung im Zylinder eingreift oder dadurch, daß durch eine Öffnung im Zylinder mittels eines Stiftes eine Drehung der Mutter bewirkt wird.

Diese bekannten hydraulischen Gewindebolzenspannvorrichtungen haben sich bewährt und lassen sich ein- oder mehrstufig gestalten, um die Kräfte aufzubringen, die für Gewindebolzen aller gängigen Größen erforderlich sind, um eine vorbestimmte Dehnung hervorzurufen.

Bei einer derartigen, aus der deutschen Gebrauchsmusterschrift 76 00 965.9 bekannten hydraulischen Gewindebolzenspannvorrichtung ist eine Sicherung gegen Überlasten des Gewindebolzens vorgesehen, die darin besteht, daß ein Begrenzerring den Hubweg des Kolbens so beschränkt, daß der Gewindebolzen bei Anlage des Kolbens an den Begrenzerring keinen weiteren Zuganstieg erfährt, so daß ein Reißen des Bolzens infolge Überdehnens vermieden wird.

Bei diesen hydraulischen Gewindebolzenspannvorrichtungen ist jedoch die Gewindebuchse ein hoch beanspruchter Teil, der nach einer gewissen Anzahl von Gewindebolzendehnungen im Bereich des Bolzengewindeendes abreißen kann. Da sich in einem solchen Fall das gesamte System schlagartig entspannt, kann der abgerissene Teil der Gewindebuchse, zusammen mit dem Kolben und dem Zylinder mit erheblicher Energie weggeschleudert werden und bedeutende Beschädigungen an benachbarten Maschinenteilen sowie Verletzungen der Bedienpersonen hervorrufen.

Bei der vorerwähnten bekannten hydraulischen Gewindebolzenspannvorrichtung ist eine Sicherung gegen Wegschleudern von Teilen der hydraulischen Gewindebolzenspannvorrichtung, wenn die Gewindebuchse reißt, nicht vorhanden.

Demgegenüber zeigt eine in der deutschen Patentschrift 1 297 557 beschriebene hydraulische Gewindebolzenspannvorrichtung eine Vorrichtung zum Schutz der Umgebung einer Hydraulikeinrichtung, die über ein Ende einer Schraube, z. B. Dampfturbinengehäuseschraube oder Kupplungsschraube gesetzt ist und mittels der die Schraube axial gedehnt werden soll, die aus einer über die Hydraulikeinrichtung gesetzte, in der Umgebung der Gewindebolzenspannvorrichtung befestigten Schutzeinrichtung in Form einer von Haltestützen getragenen Schutzplatte besteht.

Bei dieser Schutzeinrichtung handelt es sich um einen Fangkorb, der die hydraulische Gewindebolzenspannvorrichtung übergreift und an zu dem zu spannenden Gewindebolzen benachbarten Gewindebolzen befestigt wird. Diese bekannte Schutzeinrichtung ist daher umständlich in der Handhabung und weist einen erheblichen Raumbedarf auf.

Der Erfindung liegt die Aufgabe zugrunde, eine hydraulische Gewindebolzenspannvorrichtung der Eingangs erwähnten Art so zu verbessern, daß bei einem Reißen der Gewindebuchse ein sicheres Abfangen des abgerissenen Teils sowie der davon mitgerissenen Teile der Gewindebolzenspannvorrichtung gewährleistet ist.

Ausgehend von dieser Aufgabenstellung wird eine hydraulische Gewindebolzenspannvorrichtung mit den Merkmalen des Anspruchs 1 vorgeschlagen, bei der erfindungsgemäß das Fangelement für den abgerissenen Teil der Gewindebuchse sowie die davon mitgerissenen Teile der Gewindebolzenspannvorrichtung am Zylinder oder am Kolben angebracht ist und mit der Gewindebuchse oder der Mutter zusammenwirkt.

Die Erfindung geht von der Überlegung aus, daß die Gewindebuchse erfahrungsgemäß am äußersten Ende des über die Mutter vorstehenden Gewindeteils abreißt und somit ein Teil der Gewindebuchse sowie die Mutter aufgeschraubt auf dem Gewindeende verbleiben. Dieser auf dem Gewindeende verbleibende Teil der Gewindebuchse oder die Mutter wird nun dazu benutzt, die wegfliegenden Teile abzufangen, indem das Fangelement am Zylinder oder am Kolben an dem dem Maschinenteil zugewandten Ende der Gewindebuchse an der Mutter oder an einer Unterlegscheibe unter der Mutter zur Anlage kommt.

Das Fangelement kann aus wenigstens einem radial nach innen vorspringenden, das dem Maschinenteil zugewandte Ende der Gewindebuchse hintergreifenden, vorzugsweise umlaufenden Vorsprung, insbesondere einem umlaufenden Bund am Zylinder oder am Kolben oder aus einer umlaufenden, radial nach innen vorspringenden Kegelfläche am Zylinder oder am Kolben bestehen, wobei in diesem Fall eine entsprechende Kegelfläche am Ende der Gewindebuchse vorgesehen ist, die von der Kegelfläche am Zylinder oder am Kolben hintergriffen wird.

Ebenso kann das Fangelement vorteilhafterweise an wenigstens einem durch Querbohrungen im Zylinder gesteckten, das Ende der Gewindebuchse oder dem Vorsprung an der Mutter hintergreifenden Stift bestehen.

Vorzugsweise können zwei parallele Stifte durch Querbohrungen beidseitig des Gewindebolzens gesteckt sein und vorteilhafterweise die beiden Schenkel einen U-förmigen Bügel bilden. Die Stifte können entweder so angeordnet sein, daß sie in eine Ringnut in der Mutter eingreifen, oder das Ende der Gewindebuchse kann kegelförmig gestaltet sein, so daß sich der oder die Stift(e) bei einem Reißen der Gewindebuchse an die Kegelfläche anlegen. Gegebenenfalls kann der Stift bzw. können die Stifte eine entsprechende Abflachung aufweisen.

Das Fangelement kann auch aus wenigstens einem radial nach innen vorspringenden, wenigstens einen Vorsprung an einer unter der Mutter angeordneten Unterlegscheibe hintergreifenden Vorsprung am Zylinder bestehen. Dabei ist vorteilhaft, wenn zwei diametral gegenüberliegende Vorsprünge mit dazwischen liegenden Ausschnitten an der Unterlegscheibe mit zwei entsprechenden Vorsprüngen am Zylinder nach Art einer Bajonettverbindung Zusammenwirken. In diesem Fall können die Anlageflächen der Vorsprünge als Kegelflächen ausgebildet sein.

Ferner kann das Fangelement aus wenigstens einem Ringsegment mit einem in eine Ringnut am Zylinder und einem in eine Ringnut an einer Unterlegscheibe eingreifenden radialen Vorsprung bestehen. Vorzugsweise können sich die Mutter und der Zylinder auf der Unterlegscheibe abstützen und zwei mittels eines Gelenks miteinander verbundene Ringsegmente den Zylinder und die Unterlegscheibe umgreifen.

Die Erfindung wird nachstehend anhand in der Zeichnung dargestellter Ausführungsbeispiele des näheren erläutert. In der Zeichnung zeigen
- Fig. 1: eine hydraulische Gewindebolzenspannvorrichtung mit einem die Gewindebuchse hintergreifenden Bund,
- Fig. 2: eine hydraulische Gewindebolzenspannvorrichtung mit einer eine Kegelfläche an der Gewindebuchse hintergreifenden Kegelfläche am Zylinder oder am Kolben,
- Fig. 3: eine hydraulische Gewindebolzenspannvorrichtung mit die Gewindebuchse hintergreifenden Stiften,
- Fig. 4: eine hydraulische Gewindebolzenspannvorrichtung mit einem durch eine Ringnut in der Mutter gebildeten Vorsprung hintergreifenden Stiften,
- Fig. 5: eine hydraulische Gewindebolzenspannvorrichtung mit eine Unterlegscheibe unter der Mutter untergreifenden Vorsprüngen am Zylinder,
- Fig. 6: eine Draufsicht im Schnitt entlang der Linie VI - VI in Fig. 5,
- Fig. 7: eine hydraulische Gewindebolzenspannvorrichtung mit den Zylinder und eine Unterlegscheibe umgreifenden Ringsegmenten und
- Fig. 8: eine Draufsicht im Schnitt entlang der Linie VIII - VIII in Fig. 7.

Ein Maschinenteil 1, das z. B. ein Flansch eines Maschinengehäuses sein kann, soll mittels eines Gewindebolzens 2 und einer darauf geschraubten Mutter 3 verspannt werden. Um auf den Gewindebolzen 2 eine genau kontrollierbare Vorspannung aufzubringen und um Torsionsmomente von dem Gewindebolzen 2, die eine zusätzliche Belastung des Gewindebolzens 2 darstellen, fernzuhalten, wird die Mutter 3 zunächst nur von Hand bis zur Anlage an dem Maschinenteil 1 auf den Gewindebolzen 2 aufgeschraubt. Die Länge des Gewindebolzens 2 ist so bemessen, daß über die Mutter 3 ein freies Gewindeende 4 hervorsteht.

Die Gewindebolzenspannvorrichtung besteht aus einem Zylinder 7 mit einem darin mittels Dichtungen 9, 10 abgedichtet geführten Kolben 8, der einen Bund 6 an einer Gewindebuchse 5 untergreift. Diese Gewindebuchse 5 wird auf das freie Gewindeende 4 aufgeschraubt bis der Zylinder 7 zur Anlage an dem Maschinenteil 1 kommt. Auf das entgegengesetzte Ende des Zylinders 7 ist eine Kappe 16 aufgeschraubt.

Wird nun der Zylinderraum zwischen dem Zylinder 7 und dem Kolben 8 über einen Druckölkanal 11 mit Hydrauliköl beaufschlagt, wird der Gewindebolzen 2 mit einer Dehnkraft beaufschlagt, die durch die Axialbewegung des Kolbens 8 über den Bund 6 auf die Gewindebuchse 5 und von dort auf das freie Gewindeende 4 aufgebracht wird. Die erforderliche Dehnung läßt sich vorherbestimmen und z. B. anhand des Abstandes zwischen dem oberen Ende der Gewindebuchse 5 und der Kappe 16 messen. Wenn die erforderliche Dehnung erreicht ist, wird die Mutter 3 gegen den Maschinenteil 1 gedreht. Dies kann dadurch erfolgen, daß durch eine nicht dargestellte Öffnung im Zylinder 7 ein Stift eingebracht wird, mit dem sich die Mutter 3 drehen läßt. Ebenso ist es möglich, im Zwischenraum zwischen dem Zylinder 7 und der Mutter 3 einen Ring mit einem über die Mutter 3 gesteckten Innensechskant und mit einer Außenverzahnung anzuordnen, in den ein Zahnrad von außen durch eine Öffnung im Zylinder 7 eingreift, wodurch sich die Mutter 3 in Drehung versetzen läßt. Der Zylinder 7 weist im Bereich des der Mutter 3 zugekehrten Endes der Gewindebuchse 5 einen radial nach innen vorspringenden Bund 12 auf, der das Buchsenende 13 hintergreift.

Reißt nun aufgrund von Ermüdung die Gewindebuchse 5 im Bereich des Endes des herausstehenden Gewindeteils 4, würden die Gewindebuchse 5 sowie ggf. auch der Kolben 8 gegen die Innenseite der Kappe 16 geschleudert und aufgrund der großen Wucht auch noch den Zylinder 7 wegschleudern, wenn diese Elemente daran nicht durch den Bund 12, der den am Gewindeende 4 verbleibenden Teil der Gewindebuchse 5 hintergreift, gehindert würden.

Durch diesen Bund 12 in Verbindung mit dem auf dem Gewindeende 4 verbleibenden Teil der Gewindebuchse 5 wird somit mit Sicherheit ein Wegfliegen des abgerissenen Teils der Gewindebuchse 5, des Kolbens 8 und des Zylinders 7 verhindert.

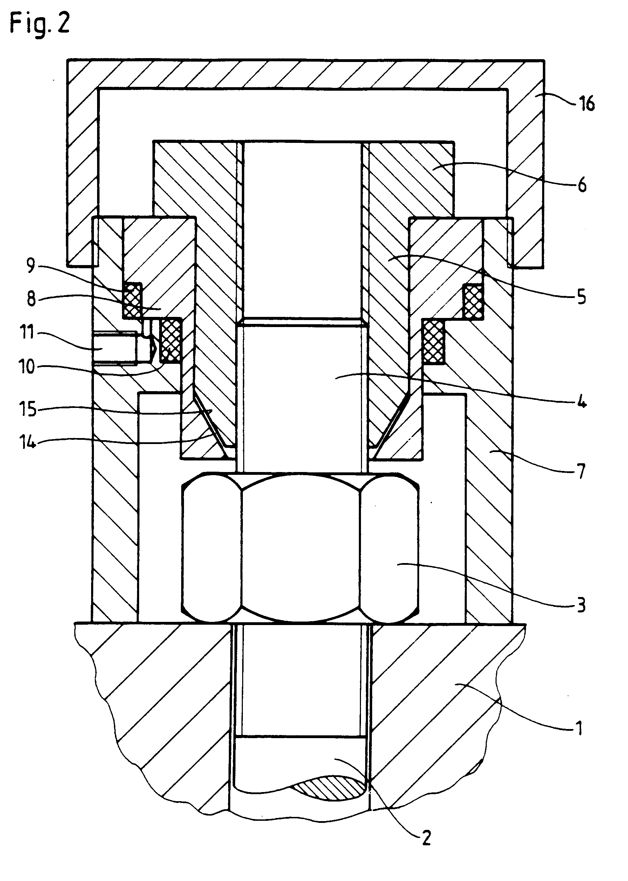

Bei dem Ausführungsbeispiel gemäß Fig. 2 ist der Kolben mit einer radial nach innen vorspringenden Kegelfläche 14 versehen, die eine entsprechende Kegelfläche 15 am Ende der Gewindebuchse 5 hintergreift. In diesem Fall werden bereits der abgerissene Teil der Gewindebuchse 5 und der Kolben 8 abgefangen, wenn die Kegelfläche 14 am Kolben 8 zur Anlage an der Kegelfläche 15 am Ende der Gewindebuchse 5 gelangt. Bei dieser Ausführungsform ergibt sich durch Reibung an den Kegelflächen 14, 15 sowie aufgrund einer elastischen und/oder plastischen Ausweitung des Kolbenbereiches bei der Kegelfläche 14 ein Energieverzehr, der eine erhebliche Stoßdämpfung bewirkt. Gegebenenfalls kann die Außenfläche des Kolbenbereiches bei der Kegelfäche 14 ebenfalls kegelig gestaltet sein, um ein kontrolliertes Ausweiten und leichtes Ausbauen des Kolbens nach einer Verformung zu erreichen.

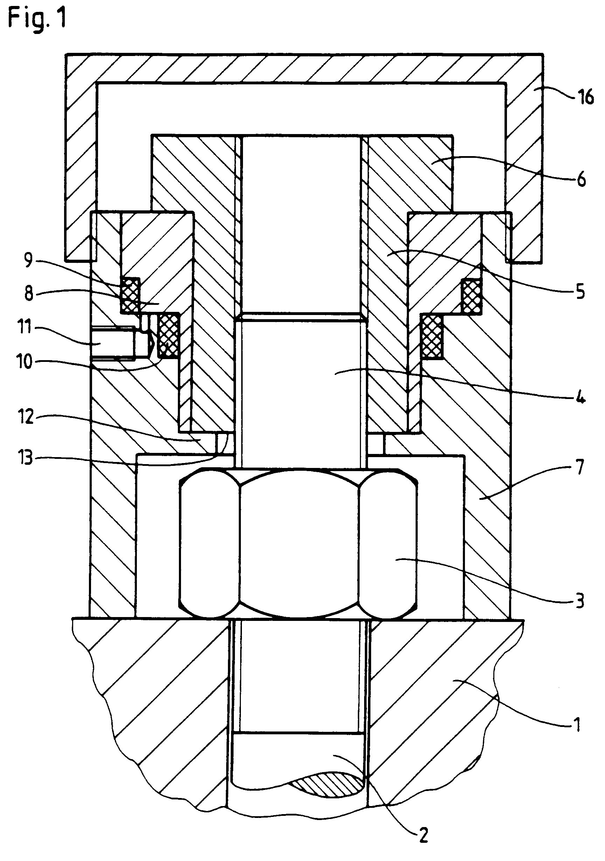

Selbstverständlich läßt sich der Zylinder 7 statt mit einem Bund 12, wie in Fig. 1 dargestellt, in analoger Weise mit einer radial nach innen vorspringenden Kegelfläche, wie in Fig. 2 am Kolben 8 dargestellt, versehen und läßt sich umgekehrt auch der Kolben 8 anstelle der in Fig. 2 dargestellten Kegelfläche 14 mit einem radial nach innen vorspringenden Bund, wie in Fig. 1 am Zylinder 7 dargestellt, versehen, ohne daß damit von dem der Erfindung zugrundeliegenden Prinzip abgewichen wird.

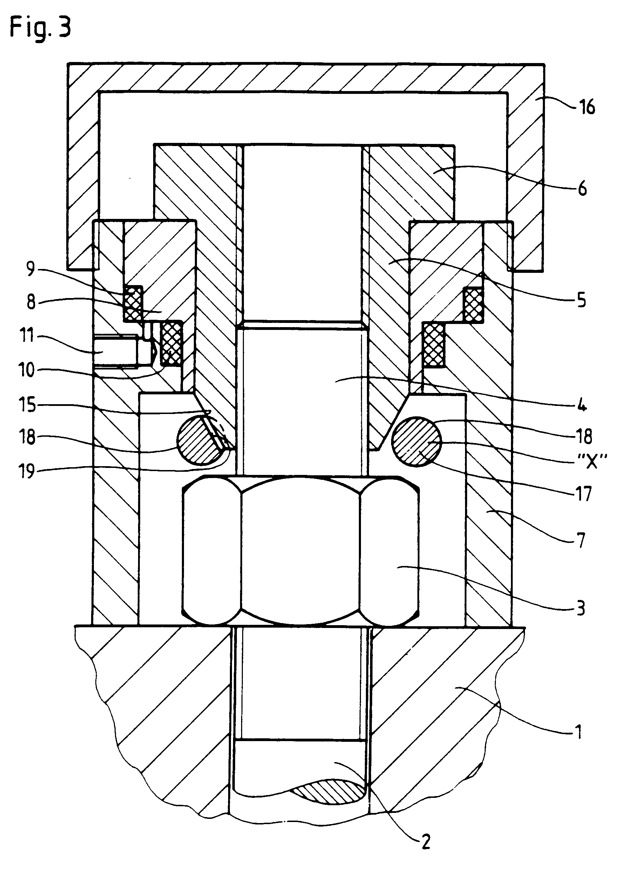

Bei der in Fig. 3 dargestellten Ausführungsform besitzt die Gewindebuchse 5 ebenfalls eine Kegelfläche 15. Im Bereich zwischen der Mutter 3 und dem Ende der Gewindebuchse 5 sind parallele Stifte 17 angeordnet, die durch parallele Bohrungen 18 im Zylinder 7 gesteckt sind. Außerhalb des Zylinders 18 können die Stifte 17 durch einen Steg miteinander verbunden sein und die Schenkel eines U-förmigen Bügels bilden. Die Stifte 17 können, wie auf der rechten Seite von Fig. 3 dargestellt, kreisrund sein, oder aber, wie auf der linken Seite von Fig. 3 dargestellt, eine Abflachung 19 aufweisen, um eine bessere Anlage an der Kegelfläche 15 der Gewindebuchse 5 zu erreichen, wenn die Gewindebuchse 5 im Bereich des Endes des herausstehenden Gewindeteils 4 reißt.

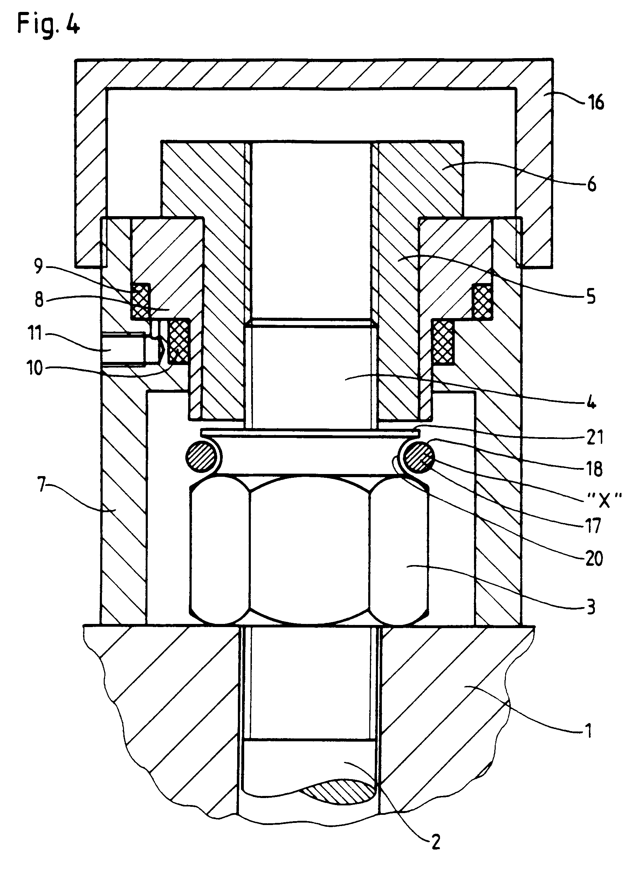

Bei der in Fig. 4 dargestellten Ausführungsform sind ebenfalls parallele Stifte 17 durch Bohrungen 18 im Zylinder 17 gesteckt. In diesem Fall sind diese Stifte 17 indessen im Bereich der Mutter 3 und zwar im Bereich einer Ringnut 20 angeordnet, die einen umlaufenden Vorsprung 21 bildet, der verhindert, daß bei einem Reißen der Gewindebuchse 5 der Kolben 8 mit dem abgerissenen Teil der Gewindebuchse 5 und dem Zylinder 7 wegfliegt.

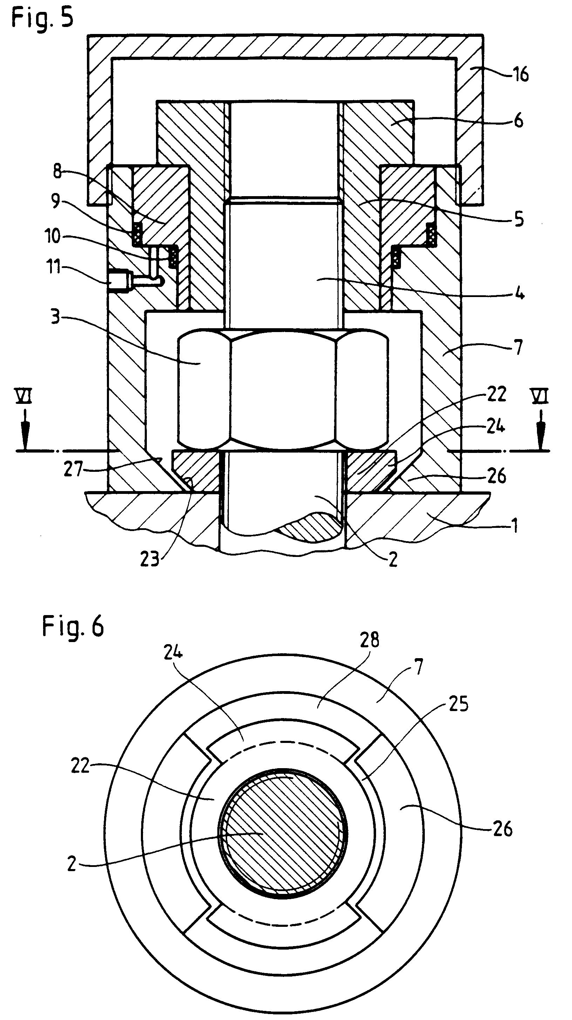

Bei der in Fig. 5 dargestellten Ausführungsform ist eine Unterlegscheibe 22 unter der Mutter 3 angeordnet, deren Unterseite mit einer Kegelfläche 23 versehen ist. Der dadurch gebildete, umlaufende Vorsprung ist durch Ausschnitte 25 unterbrochen, so daß sich zwei diametral gegenüberliegende Vorsprünge 24 ergeben, die sich etwa über 90° des Umfangs der Unterlegscheibe 22 erstrecken. Entsprechende Vorsprünge 26 sind am Fuß des Zylinders 7 angeordnet und ebenfalls durch Ausschnitte 28 unterbrochen. Die so gebildeten zwei diametral gegenüberliegenden Vorsprünge 26 weisen entsprechende Kegelflächen 27 auf. Die Vorsprünge 24 und die Ausschnitte 25 an der Unterlegscheibe 22 wirken mit den Vorsprüngen 26 und den Ausschnitten 28 am Zylinder 3 nach Art einer Bajonettverbindung zusammen, so daß sich der Zylinder 7 in der in Fig. 6 dargestellten Stellung über die Unterlegscheibe 22 setzen läßt und mit ihr durch Drehung um 90° verriegelt wird. In dieser nicht gezeigten Stellung wirken die Vorsprünge 26, die die Vorsprünge 27 untergreifen, als Fangelemente für die hydraulische Gewindebolzenspannvorrichtung, wenn die Gewindebuchse 5 reißen sollte.

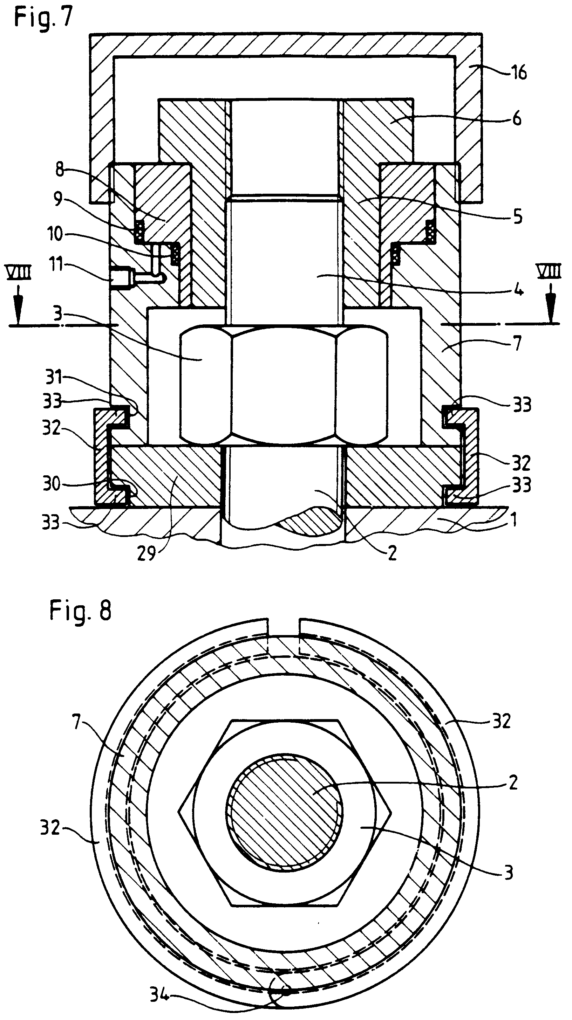

Bei der Ausführungsform gemäß Fig. 7 ist eine Unterlegscheibe 29 vorgesehen, deren Außendurchmesser dem Außendurchmesser des Zylinders 7 entspricht. Die Unterlegscheibe 29 und der Zylinder 7 weisen je eine umlaufende Ringnut 30 und 31 auf.

Zwei Ringsegmente 32 mit radialen Vorsprüngen 33, die mittels eines Gelenks 34 miteinander verbunden sind, lassen sich nach dem Ansetzen der hydraulischen Gewindebolzenspannvorrichtung um die Unterlegscheibe 29 und den Zylinder 7 herumlegen, so daß die radialen Vorsprünge 33 in die Ringnuten 30, 31 eingreifen. Auf diese Weise wirken die Ringsegmente 32 als Fangelemente für die hydraulische Gewindebolzenspannvorrichtung, falls die Gewindebuchse 5 reißen sollte.

Die Einzelheiten der hydraulischen Gewindebolzenspannvorrichtung sind nur schematisch dargestellt, da diese an sich bekannt sind. Insbesondere ist jedoch noch darauf zu verweisen, daß für hohe aufzubringende Kräfte mehrere Kolben axial hintereinander angeordnet sein können, von denen sich einer oder mehrere mit Drucköl beaufschlagen lassen, um eine Anpassung an die geforderten Kräfte vorzunehmen.

## Patentansprüche

1. Hydraulische Gewindebolzenspannvorrichtung mit einem sich auf einem mittels eines Gewindebolzens (2) und einer Mutter (3) zu verspannenden Maschinenteil (1) abstützenden Zylinder (7), einem darin abgedichtet geführten, sich an einer auf ein Gewindeende (4) des Gewindebolzens (2) aufgeschraubten Gewindebuchse (5) abstützenden Kolben (8) und mit einer ein Wegschleudern von Teilen der Vorrichtung bei einem Bruch unter Last verhindernden Fangelement, **dadurch gekennzeichnet,** daß das Fangelement aus am Zylinder (7) oder am Kolben (8) angebrachten und bei einem Abreißen der Gewindebuchse mit der Unterseite der Gewindebuchse (5) oder mit der Mutter (3) zusammenwirkenden, zusätglichen Greifelementen (12, 14, 17, 26, 32, 33) und einer den Zylinder (7) oberhalb des Kolbens (8) abschließenden Kappe (16) besteht.

2. Hydraulische Gewindebolzenspannvorrichtung nach Anspruch 1, **dadurch gekennzeichnet,** daß das Fangelement aus wenigstens einem radial nach innen vorspringenden, das dem Maschinenteil (1) zugewandte Ende (13) der Gewindebuchse (5) hintergreifenden Vorsprung (12, 14) am Zylinder (7) oder am Kolben (8) besteht.

3. Hydraulische Gewindebolzenspannvorrichtung nach Anspruch 2, **dadurch gekennzeichnet,** daß der Vorsprung aus einer umlaufenden, radial nach innen vorspringenden Kegelfläche (14) am Zylinder (7) oder am Kolben (8) besteht und eine entsprechende Kegelfläche (15) am Ende der Gewindebuchse (5) hintergreift.

4. Hydraulische Gewindebolzenspannvorrichtung nach Anspruch 2, **dadurch gekennzeichnet,** daß der Vorsprung aus einem umlaufenden radial nach innen vorspringenden Bund (12) am Zylinder (7) oder am Kolben (8) besteht.

5. Hydraulische Gewindebolzenspannvorrichtung nach Anspruch 1, **dadurch gekennzeichnet,** das das Fangelement aus wenigstens einem durch Querbohrungen (18) im Zylinder (7) gesteckten, das Ende der Gewindebuchse (5) oder den Vorsprung (21) an der Mutter (3) hintergreifenden Stift (17) besteht.

6. Hydraulische Gewindebolzenspannvorrichtung nach Anspruch 5, **dadurch gekennzeichnet,** daß zwei parallele Stifte (17) durch Querbohrungen (18) beidseitig des Gewindebolzens (2) gesteckt sind.

7. Hydraulische Gewindebolzenspannvorrichtung nach Anspruch 5, **dadurch gekennzeichnet,** daß die zwei Stifte (17) die beiden Schenkel eines U-förmigen Bügels bilden.

8. Hydraulische Gewindebolzenspannvorrichtung nach Anspruch 5 oder 6, **dadurch gekennzeichnet,** daß der Vorsprung (21) an der Mutter (3) durch eine Ringnut (20) gebildet ist.

9. Hydraulische Gewindebolzenspannvorrichtung nach Anspruch 5, 6, 7 oder 8, **dadurch gekennzeichnet,** daß das Ende der Gewindebuchse (5) kegelförmig ist und der Stift (17) eine sich an die Kegelfläche (15) anlegende Abflachung (19) aufweist.

10. Hydraulische Gewindebolzenspannvorrichtung nach Anspruch 1, **dadurch gekennzeichnet,** daß das Fangelement aus wenigstens einem radial nach innen vorspringenden, wenigstens einen Vorsprung (24) an einer unter der Mutter (3) angeordneten Unterlegscheibe (22) hintergreifenden Vorsprung (26) am Zylinder (7) besteht.

11. Hydraulische Gewindebolzenspannvorrichtung nach Anspruch 10, **dadurch gekennzeichnet,** daß zwei diametral gegenüberliegende Vorsprünge (24) mit dazwischen liegenden Ausschnitten (25) an der Unterlegscheibe (22) mit zwei entsprechenden Vorsprüngen (26) am Zylinder (7) nach Art einer Bajonettverbindung zusammenwirken.

12. Hydraulische Gewindebolzenspannvorrichtung nach Anspruch 10 oder 11, **dadurch gekennzeichnet,** daß die Anlageflächen (23, 27) der Vorsprünge (24, 26) als Kegelflächen ausgebildet sind.

13. Hydraulische Gewindebolzenspannvorrichtung nach Anspruch 10, **dadurch gekennzeichnet,** daß das Fangelement aus wenigstens einem Ringsegment (32) mit zwei in eine Ringnut (31) am Zylinder (7) und in eine Ringnut (31) an einer Unterlegscheibe (29) eingreifenden radialen Vorsprüngen (33) besteht.

14. Hydraulische Gewindebolzenspannvorrichtung nach Anspruch 13, **dadurch gekennzeichnet,** daß sich die Mutter (3) und der Zylinder (7) auf der Unterlegscheibe (29) abstützen und zwei mittels eines Gelenks (34) miteinander verbundene Ringsegmente (32) den Zylinder (7) und die Unterlegscheibe (29) umgreifen.

## Claims

1. Hydraulic threaded-bolt clamping device having a cylinder (7) supported on a machine part (1) which is to be clamped by means of a threaded bolt (2) and a nut (3), a piston (8) which is guided in said cylinder in a sealed manner and is supported on a threaded bushing (5) which is screwed onto a thread end (4) of the threaded bolt (2), and having an interception element, which prevents parts of the device from being thrown off in the event of a break under load, characterised in that the interception element comprises additional holding elements (12, 14, 17, 26, 32, 33), which are mounted on the cylinder (7) or on the piston (8) and in the event of the threaded bushing being torn off, cooperate with the underside of the threaded bushing (5) or with the nut (3), and a cap (16) which closes off the cylinder (7) above the piston (8).

2. Hydraulic threaded-bolt clamping device according to claim 1, characterised in that the interception element comprises at least one projection (12, 14) on the cylinder (7) or on the piston (8), which projection projects radially inwards and grips behind the end (13) of the threaded bushing (5) that faces the machine part (1).

3. Hydraulic threaded-bolt clamping device according to claim 2, characterised in that the projection comprises a circumferential conical surface (14) on the cylinder (7) or on the piston (8), which conical surface projects radially inwards, and grips behind a corresponding conical surface (15) on the end of the threaded bushing (5).

4. Hydraulic threaded-bolt clamping device according to claim 2, characterised in that the projection comprises a circumferential shoulder (12) on the cylinder (7) or on the piston (8), which shoulder projects radially inwards.

5. Hydraulic threaded-bolt clamping device according to claim 1, characterised in that the interception element comprises at least one pin (17) which is pushed through transverse bores (18) in the cylinder (7) and grips behind the end of the threaded bushing (5) or the projection (21) on the nut (3).

6. Hydraulic threaded-bolt clamping device according to claim 5, characterised in that two parallel pins (17) are pushed through transverse bores (18) on either side of the threaded bolt (2).

7. Hydraulic threaded-bolt clamping device according to claim 5, characterised in that the two pins (17) form the two limbs of a U-shaped hoop.

8. Hydraulic threaded-bolt clamping device according to claim 5 or 6, characterised in that the projection (21) on the nut (3) is formed by an annular groove (20).

9. Hydraulic threaded-bolt clamping device according to claim 5, 6, 7 or 8, characterised in that the end of the threaded bushing (5) is conical, and the pin (17) has a flattened area (19) which rests on the conical surface (15).

10. Hydraulic threaded-bolt clamping device according to claim 1, characterised in that the interception element comprises at least one projection (26) on the cylinder (7), which projection projects radially inwards and grips behind at least one projection (24) on a washer (22) arranged underneath the nut (3).

11. Hydraulic threaded-bolt clamping device according to claim 10, characterised in that two diametrically opposed projections (24) on the washer (22), which projections have cut-outs (25) between them, cooperate with two corresponding projections (26) on the cylinder (7) in the manner of a bayonet connection.

12. Hydraulic threaded-bolt clamping device according to claim 10 or 11, characterised in that the support surfaces (23, 27) of the projections (24, 26) are constructed as conical surfaces.

13. Hydraulic threaded-bolt clamping device according to claim 10, characterised in that the interception element comprises at least one ring segment (32) having two radial projections (33) which engage in an annular groove (31) on the cylinder (7) and in an annular groove (31) on a washer (29).

14. Hydraulic threaded-bolt clamping device according to claim 13, characterised in that the nut (3) and the cylinder (7) are supported on the washer (29), and two ring segments (32), which are connected to each other by means of a joint (34), surround the cylinder (7) and the washer (29).

## Revendications

1. Dispositif de serrage hydraulique pour boulon fileté avec un cylindre (7) prenant appui sur un élément de machine (1) à serrer au moyen d'un boulon fileté (2) et d'un écrou (3), un piston (8) guidé de manière étanche à l'intérieur, prenant appui contre une douille taraudée (5), vissée sur une extrémité filetée (4) du boulon fileté (2) et avec un élément d'arrêt empêchant une projection de pièces du dispositif en cas de rupture sous charge, caractérisé en ce que l'élément d'arrêt est constitué d'éléments d'arrêt prise (12, 14, 17, 26, 32, 33) supplémentaires, placés sur le cylindre (7) ou le piston (8), coopérant, en cas d'arrachage de la douille taraudée, avec la face inférieure de le douille taraudée (5) ou avec l'écrou (3), et d'un capuchon (16) fermant le cylindre (7), au-dessus du piston (8).

2. Dispositif de serrage hydraulique pour boulon fileté selon la revendication 1, caractérisé en ce que l'élément d'arrêt est constitué d'au moins une saille (12 ou 14), sur le cylindre (7) ou le piston (8), faisant saillie radialement vers l'intérieur, passant derrière l'extrémité (13), tournée vers l'élément de machine (1), de la douille taraudée (5).

3. Dispostif de serrage hydraulique pour boulon fileté selon la revendication 2, caractérisé en ce que la saillie est constituée d'une surface de cône (14), sur le cylindre (7) ou le piston (8), périphérique, faisant saillie radialement vers l'intérieur, et passant derrière une surface de cône (15) correspondante, à l'extrémité de la douille taraudée (5).

4. Dispositif de serrage hydraulique pour boulon fileté selon la revendication 2, caractérisé en ce que la saillie est constituée d'un épaulement (12), sur le cylindre (7) ou le piston (8), périphérique, faisant saillie radialement vers l'intérieur.

5. Dispositif de serrage hydraulique pour boulon fileté selon la revendication 1, caractérisé en ce que l'élément d'arrêt est constitué d'au moins une cheville (17) enfoncée à travers des perçages transversaux (18) dans le cylindre (7), passant derrière l'extrémité de la douille taraudée (5) on la saillie (21) sur l'écrou (3).

6. Dispositif de serrage hydraulique pour boulon fileté selon la revendication 5, caractérisé en ce que deux chevilles (17) parallèles sont enfoncées à travers des perçages transversaux (18), des deux côtés du boulon fileté (2).

7. Dispositif de serrage hydraulique pour boulon fileté selon la revendication 5, caractérisé en ce que les deux chevilles (17) forment les deux branches d'un étrier en U.

8. Dispositif de serrage hydraulique pour boulon fileté selon le revendication 5 ou 6, caractérisé en ce que la saillie (21) est formée sur l'écrou (3), par une rainure annulaire (20).

9. Dispositif de serrage hydraulique pour boulon fileté selon les revendications 5, 6, 7 ou 8, caractérisé en ce que l'extrémité de la douille taraudée (5) est conique et la cheville (17) présente une partie aplatie (19), s'appliquant contre la surface de cône (15).

10. Dispositif de serrage hydraulique pour boulon fileté selon la revendication 1, caractérisé en ce que l'élément d'arrêt est constitué d'au moins une saillie (26), sur le cylindre (7), faisant saillie radialement vers l'intérieur, passant derrière au moins une saillie (24) sur une rondelle (22), placée sous l'écrou (3).

11. Dispositif de serrage hydraulique pour boulon fileté selon la revendication 10, caractérisé en ce que deux saillies (24), diamétralement apposées, avec des portions (25) évidées, situées entre elles, coopèrent, sur la rondelle (22), avec deux saillies (26) correspondantes sur le cylindre (7), à la manière d'un assemblage à baïonnette.

12. Dispositif de serrage hydraulique pour boulon fileté selon la revendication 10 ou 11, caractérisé en ce que les surfaces d'application (23, 27) des saillies (24, 26) sont conformées en surfaces de cône.

13. Dispositif de serrage hydraulique pour boulon fileté selon la revendication 10, caractérisé en ce que l'élément d'arrêt est constitué d'au moins un segment d'anneau (32) avec deux saillies (33) radiales, s'engageant dans une rainure annulaire (31) sur le cylindre (7) et dans une rainure annulaire (31) sur une rondelle (29).

14. Dispositif de serrage hydraulique pour boulon fileté selon la revendication 13, caractérisé en ce que l'écrou (3) et le cylindre (7) prennent appui sur la rondelle (29) et entourent deux segments d'anneau (32) reliés entre eux au moyen d'une articulation (34), le cylindre (7) et la rondelle (29).
